# EUROPEAN PATENT APPLICATION

(11) **EP 0 978 489 A2**
(43) Date of publication of application: **09.02.2000**
(21) Application number: 99306258.7
(22) Date of filing: 06.08.1999
(51) Int. Cl.: C03B 23/24

(54) **Glass fusing method and device**

(30) Priority: 07.08.1998 JP 22473298; 29.01.1999 JP 2235899
(71) Applicant: SHINMAYWA INDUSTRIES, LTD., Nishinomiya-shi, Hyogo 663 (JP)
(72) Inventor: Takeuchi, Kiyoshi, Toyono-gun, Osaka 563-0105 (JP); Takigawa, Shirou, Kyoto-shi, Kyoto 603-8477 (JP); Kondou, Takahiko, Suita-shi, Osaka 565-0836 (JP); Hosoya, Takashi, Ibaraki-shi, Osaka 567-0832 (JP); Iwasaki, Yasukuni, Nishinomiya-shi, Hyogo 663-8001 (JP)
(74) Representative: Abbie, Andrew Kenneth

(57) **Abstract**

The present invention provides a glass fusing method comprising the steps of preheating contact or close portions of two glass pieces to a temperature which is lower than a fusing temperature of the glass, fusing the portions by locally heating them to a temperature which is equal to or higher than the fusing temperature of the glass and fusing them after the preheating step, and annealing the portions to a temperature which is lower than the fusing temperature of the glass after the fusing step. The fusing method is carried out as follows, for example. More specifically, a laser beam is supplied from a laser oscillator (10) to a torch head (8), and the laser beam supplied from the torch head (8) is irradiated as irradiated light (80) on portions of glass plates (A) and (B) to be fused together. The torch head (8) circulates around peripheral edge portions of the glass plates (A) and (B) three times while changing a heating level of the irradiated light (80). Preheating, fusion and annealing are performed for first, second and third circulations, respectively.

## Description

### BACKGROUND OF THE INVENTION

### 1. Field of the Invention

The present invention relates to a glass fusing method and device for fusing glass pieces by irradiating light such as a laser beam.

### 2. Description of the Related Art

There is a technology for fusing two glass pieces by irradiating light such as a laser beam. For example, in the case where two glass plates are stuck together to manufacture a sealed insulating glass, the glass plates need to be fused together.

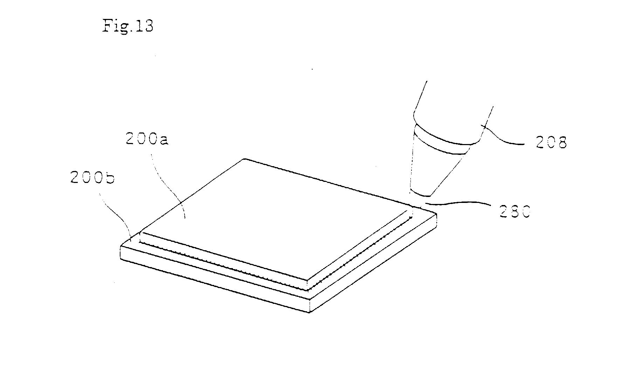

Fig. 13 shows a processing state in which peripheral edge portions of two glass plates 200a and 200b are fused together by a laser beam of a laser beam machine. The glass plates 200a and 200b are fixed onto a table (a working table) of the laser beam machine, and a torch head 208 for emitting a laser beam can be moved relatively with respect to the working table. The torch head 208 is moved with respect to the table in such a manner that it is moved relatively along the peripheral edge portions of the glass plates 200a and 200b while irradiating a laser beam 280 on the peripheral edge portions of the glass plates 200a and 200b as shown in oblique lines in Fig. 13. A spacer having a very small height is interposed between the two glass plates 200a and 200b, which is not shown. Therefore, a very small clearance which is equivalent to the height of the spacer is made between the two glass plates 200a and 200b. Accordingly, when the fusion is completely performed along the peripheral edge portions of the glass plates 200a and 200b, an airtight space isolated from the outside is formed between the two glass plates 200a and 200b. For example, if the space is filled with a gas such as dry air or is evacuated, a highly adiabatic sealed insulating glass can be manufactured.

In the above-mentioned fusing method, however, fine cracks are generated in the fused portions of the glass plates 200a and 200b, and the glass plates 200a and 200b are sometimes broken greatly. The reason is that a thermal stress is generated on the glass plates 200a and 200b. More specifically, the portions of the glass plates 200a and 200b on which the laser beam 280 is irradiated are heated to the fusing temperature of a glass or more. However, a temperature on the circumference of the fused portion is much lower than the fusing temperature of the glass because of the low thermal conductivity of the glass. When a temperature gradient in the glass has a predetermined value or more, the glass plates 200a and 200b cannot be resistant to the thermal stress, thereby generating cracks and fractures.

When the cracks and fractures are generated, the space formed between the two glass plates 200a and 200b of the sealed insulating glass cannot be kept airtight, for example.

### SUMMARY OF THE INVENTION

In order to solve the above-mentioned problems, the present invention provides a glass fusing method for fusing contact or close portions of two glass pieces, comprising the steps of preheating the portions to a temperature which is lower than a fusing temperature of the glass, fusing the portions by locally heating them to a temperature which is equal to or higher than the fusing temperature of the glass after the preheating step, and annealing the portions to a temperature which is lower than the fusing temperature of the glass after the fusing step. In the glass fusing method, the portions may be locally heated by irradiation of light at the fusing step.

According to the method, the portions to be fused together are first heated to the temperature which is lower than the fusing temperature of the glass at the preheating step. Since the heating temperature is lower than the fusing temperature, temperature gradients of the portions to be fused together and the circumferential portions thereof are gentle. After the circumferential portions of the portions to be fused together are fully preheated, the portions to be fused together are heated to the temperature which is equal to or higher than the fusing temperature. At this time, the circumferential portions of the portions to be fused together are preheated at the preheating step. Therefore, even if the temperature of the portions to be fused together is equal to or higher than the fusing temperature, a steep temperature gradient is not generated in the glass pieces. The next annealing step prevents the portions to be fused together from being rapidly cooled. Consequently, the steep temperature gradient can be prevented from being generated in the portions to be fused together and the circumferential portions thereof. Thus, the steep temperature gradient is not generated in the glass pieces. Therefore, cracks and fractures are caused with difficulty.

In the glass fusing method for performing the fusion by the irradiation of light, the light may be a laser beam.

In order to solve the above-mentioned problems, the present invention provides a glass fusing device for fusing contact or close portions of two glass pieces by irradiating light thereon, comprising preheating means for preheating the portions to a temperature which is lower than a fusing temperature of the glass, fusing means for fusing the portions by heating them to a temperature which is equal to or higher than the fusing temperature of the glass after the preheating performed by the preheating means, and annealing means for annealing the portions to a temperature which is lower than the fusing temperature of the glass after the fusion performed by the fusing means, wherein the fusing means includes at least a light irradiating device and control means for regulating a heating level of the portions by light irradiated from the light irradiating device, and the fusing means fuses the portions by regulating the heating level through the control means to heat the portions to the temperature which is equal or higher than the fusing temperature of the glass. According to the device, the portions to be fused together are first heated to the temperature which is lower than the fusing temperature of the glass by the preheating. Since the heating temperature is lower than the fusing temperature, temperature gradients of the portions to be fused together and the circumferential portions thereof are gentle. After the circumferential portions of the portions to be fused together are fully preheated, the portions to be fused together are heated to the temperature which is equal to or higher than the fusing temperature. At this time, the circumferential portions of the portions to be fused together are preheated. Therefore, even if the temperature of the portions to be fused together is equal to or higher than the fusing temperature, a steep temperature gradient is not generated in the glass pieces. The next annealing prevents the portions to be fused together from being rapidly cooled. Consequently, the steep temperature gradient can be prevented from being generated in the portions to be fused together and the circumferential portions thereof. Thus, the steep temperature gradient is not generated in the glass pieces. Therefore, cracks and fractures are caused with difficulty.

In the device, the control means may regulate the heating level by adjusting an output of a light source of the light irradiating device or by adjusting a collecting state of the light for the portions. A spot diameter of the light may be changed in the portions by adjusting the collecting state of the light through the control means. Consequently, a wider range can also be heated by reducing the degree of collection of the irradiated light in the portions on the glass pieces which are to be fused together, that is, by increasing the spot diameter of the irradiated light. To adjust the collecting state, furthermore, a table for fixing the glass pieces and a moving device capable of changing a distance between the table and an irradiating portion of the light irradiating device may be provided, thereby causing the control means to control the moving device to regulate the distance between the table and the irradiating portion, or a lens moving device for moving an objective lens in the light irradiating device may be provided, thereby causing the control means to control the lens moving device to move the objective lens.

In order to solve the above-mentioned problems, the present invention provides another glass fusing device for fusing contact or close portions of two glass pieces, comprising preheating means for preheating the portions to a temperature which is lower than a fusing temperature of the glass, fusing means for fusing the portions by locally heating them to a temperature which is equal to or higher than the fusing temperature of the glass after the portions are preheated, and annealing means for annealing the portions to a temperature which is lower than the fusing temperature of the glass after the portions are fused. According to the device, the portions to be fused together are first heated to the temperature which is lower than the fusing temperature of the glass by the preheating. Since the heating temperature is lower than the fusing temperature, temperature gradients of the portions to be fused together and the circumferential portions thereof are gentle. After the circumferential portions of the portions to be fused together are fully preheated, the portions to be fused together are locally heated to the temperature which is equal to or higher than the fusing temperature. At this time, the circumferential portions of the portions to be fused together are preheated. Therefore, even if the temperature of the portions to be fused together is equal to or higher than the fusing temperature, a steep temperature gradient is not generated in the glass pieces. The next annealing prevents the portions to be fused together from being rapidly cooled. Consequently, the steep temperature gradient can be prevented from being generated in the portions to be fused together and the circumferential portions thereof. Thus, the steep temperature gradient is not generated in the glass pieces. Therefore, cracks and fractures are caused with difficulty.

In the glass fusing device, the fusing means may locally heat the portions by irradiation of light, and furthermore, the light irradiated from the fusing means may be a laser beam.

In the glass fusing device, the preheating means may preheat the portions by irradiation of light. In this case, the light irradiated from the preheating means may be a laser beam. Moreover, the preheating means may preheat the portions by irradiation of a flame and may be a heating chamber capable of accommodating the two glass pieces. Furthermore, the annealing means may heat the portions by irradiation of a flame and may be a heating chamber capable of accommodating the two glass pieces.

### BRIEF DESCRIPTION OF THE DRAWINGS

These and other aspects and advantages of the invention will become apparent from the following detailed description of preferred embodiments when taken in conjunction with the accompanying drawings, in which:
Figure 1 is a perspective view showing a glass fusing device according to an embodiment of the invention;
Figure 2 is a perspective view showing two glass plates;
Figure 3 is a side view showing the glass plates together with a torch head;
Figure 4 is a plan view showing the glass plates together with the torch head;
Figure 5 is a chart showing an output state of a laser oscillator along the passage of time;
Figure 6 is a sectional view showing the torch head together with a table and the glass plates;
Figures 7a to 7c are sectional views showing the torch head together with the table and the glass plates;
Figures 8a to 8c are views illustrating a glass fusing device according to another embodiment of the invention which uses a flame irradiating device at a preheating step and an annealing step and uses a laser beam irradiating device at a fusing step;
Figures 9a to 9c are views illustrating a glass fusing device according to yet another embodiment of the invention which uses a chamber at a preheating step and an annealing step and uses a laser beam irradiating device at a fusing step;
Figure 10 is a view illustrating the structure of a glass fusing device according to a further embodiment of the invention which uses a heating chamber at a preheating step and an annealing step and uses a laser beam irradiating device at a fusing step;
Figure 11 is a view illustrating the structure of a glass fusing device according to a further embodiment of the invention which uses a heating chamber at a preheating step and an annealing step and uses a laser beam irradiating device at a fusing step;
Figure 12 is a view illustrating the structure of a glass fusing device according to a further embodiment of the invention which uses a heating chamber at a preheating step and an annealing step and uses a laser beam irradiating device at a fusing step; and
Figure 13 is a view showing a processing state in which peripheral edge portions of two glass plates are fused together by a laser beam of a laser beam machine.

### DETAILED DESCRIPTION OF THE PREFERRED EMBODIMENTS

For a general understanding of the features of the invention, reference is made to the drawings. In the drawings, like reference numerals have been used throughout to designate like elements.

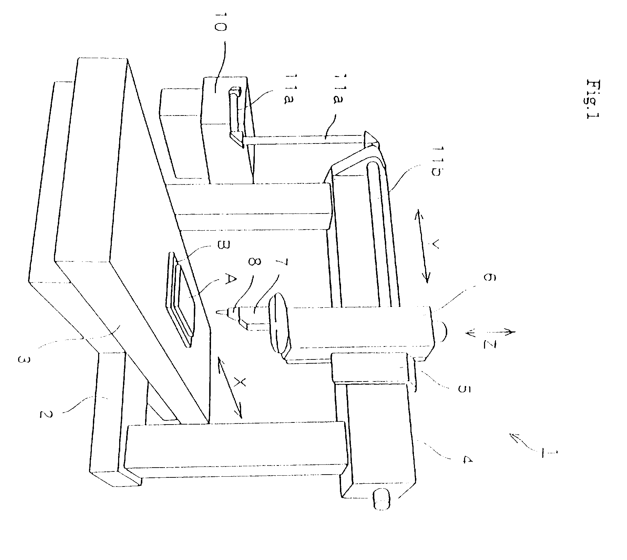

Fig. 1 shows an embodiment of a glass fusing device capable of carrying out a glass fusing method according to the invention. The glass fusing device 1 shown in Fig. 1 has almost the same structure as a laser beam machine. More specifically, the glass fusing device 1 comprises a laser beam irradiating device. The laser beam irradiating device includes a laser oscillator 10 acting as a light source, a torch head 8 acting as an irradiating portion, guide cylinders 11a and 11b for guiding a laser beam from the laser oscillator 10 to the torch head 8 and the like. The glass fusing device 1 is provided with a table (a working table) 3 capable of being moved over a base 2 in an X direction. A gate type frame member 4 is erected with the table 3 interposed therebetween. A sliding member 5 is provided on the upper side of the frame member 4 so as to be movable in a Y direction. The sliding member 5 is provided with a lift member 6 capable of being lifted in a Z direction. A turning member 7 is provided in the lower end portion of the lift member 6 so as to be turnable around a vertical axis. The torch head 8 acting as an irradiating portion of the laser beam irradiating device is provided on the turning member 7 such that an angle can be changed with respect to the turning member 7.

A laser beam generated by the laser oscillator 10 can be guided to the torch head 8 through the inside of each of the guide cylinders 11a and 11b, and can be irradiated from the tip of the torch head 8 over glass plates A and B which are glass pieces fixed onto the table 3.

The movement of the table 3 in the X direction with respect to the base 2, the movement of the sliding member 5 in the Y direction with respect to the frame member 4, the movement of the lift member 6 in the Z direction with respect to the sliding member 5, the turn of the turning member 7 around the vertical axis with respect to the lift member 6 and the change of the angle of the torch head 8 with respect to the turning member 7 are performed by the driving force of a motor provided in the glass fusing device 1. The movements, the turn and the change of the angle are controlled by a controller acting as control means provided in the glass fusing device 1. By the control of the controller, the relative movement of the torch head 8 with respect to the table 3 can freely be performed. By a moving device thus constituted, a distance between the torch head 8 and the table 3 can be changed and the torch head 8 can be moved in an XY plane with respect to the table 3. For example, the distance between the torch head 8 and the table 3 can be regulated by lifting the lift member 6 with respect to the sliding member 5. Moreover, a combination of the movement of the table 3 in the X direction with respect to the base 2 and the movement of the sliding member 5 in the Y direction with respect to the frame member 4 can cause the torch head 8 to be moved freely in the XY plane with respect to the table 3.

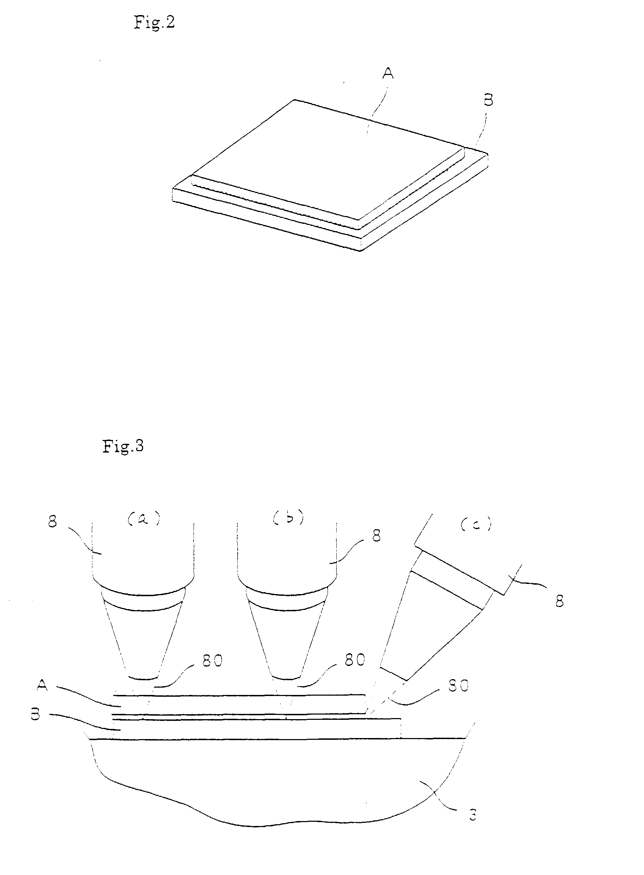

Fig. 2 is a perspective view showing two glass plates A and B fixed onto the table 3. When a laser beam is irradiated on the peripheral edge portions of the two glass plates A and B which are shown in oblique lines to perform fusion, a sealed insulating glass can be manufactured. A spacer having a very small height (which is not shown) is provided between the two glass pates A and B. Consequently, a very small clearance equivalent to the height of the spacer is made between the two glass plates A and B. In other words, the peripheral edge portions of the glass plates A and B shown in oblique lines in Fig. 2 are close to each other but are not in contact with each other. The clearance formed between the two glass plates A and B by the spacer becomes an airtight space by fusing the peripheral edge portions together.

Fig. 3 is a side view showing the glass plates A and B together with the torch head 8. The torch head 8 is moved to the right in Fig. 3 with respect to the table 3, that is, in a direction from a state (a) to a state (b) while irradiating the light 80 obliquely downward over the peripheral edge portions of the glass plates A and B to be fused together. When the irradiated light 80 reaches the corners of the peripheral edge portions, an angle of the torch head 8 formed with respect to the table 3 is changed so that a state (c) is obtained.

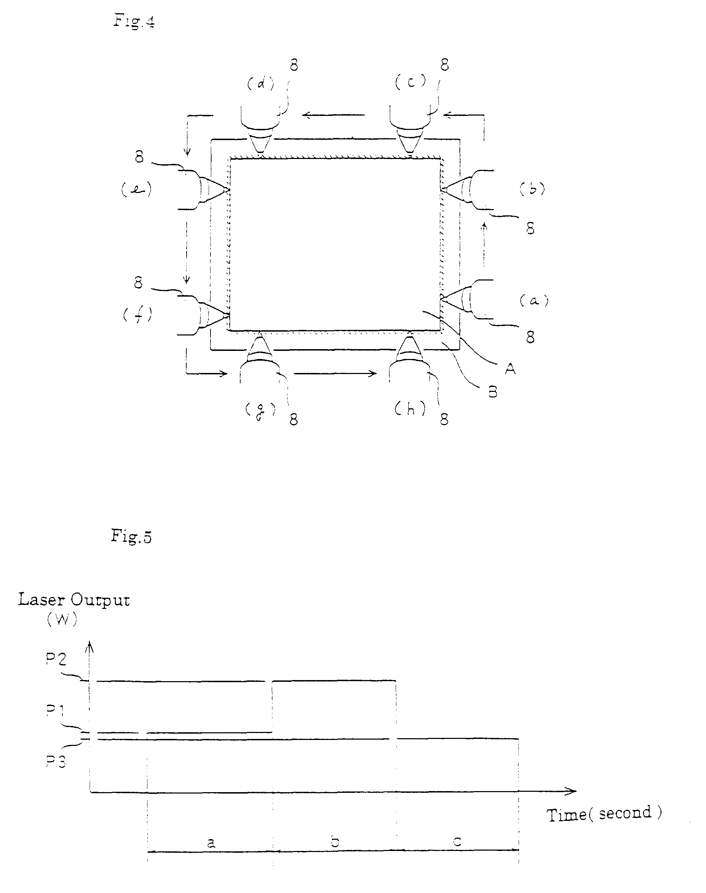

Fig. 4 is a plan view showing the glass plates A and B together with the torch head 8. The torch head 8 circulates around the peripheral edge portions of the glass plates A and B shown in oblique lines while changing the position and angle thereof as shown in (a) to (h).

The intensity of the light irradiated from the torch head 8 can be regulated by adjusting the output of the laser oscillator 10. More specifically, heating levels in the peripheral edge portions of the glass plates A and B can be regulated by adjusting the output of the laser oscillator 10. The output of the laser oscillator 10 is adjusted by a controller. If the torch head 8 is caused to circulate around the peripheral edge portions of the glass plates A and B three times while changing the heating levels, the glass plates A and B can be fused together without causing cracks and fractures.

Fig. 5 is a chart showing the output state of the laser oscillator 10 which is obtained along the passage of time. A period a denotes a period for which the torch head 8 first circulates around the peripheral edge portions of the glass plates A and B and which corresponds to a preheating step. At this time, the output of the laser oscillator 10 is indicated as P1 and it is possible to obtain such a heating level as to heat the peripheral edge portions of the glass plates A and B to a temperature which is lower than the fusing temperature of the glass. Therefore, fusing is not performed. Thus, the portions to be fused together and the circumferential portions thereof are preheated to a temperature which is lower than the fusing temperature.

A period b denotes a period for which the torch head 8 circulates around the peripheral edge portions of the glass plates A and B for a second time and which corresponds to a fusing step. More specifically, after the torch head 8 circulates around the peripheral edge portions for preheating, it further circulates around the peripheral edge portions. At this time. the output of the laser oscillator 10 is indicated as P2 and it is possible to obtain such a heating level as to heat the peripheral edge portions of the glass plates A and B to a temperature which is equal to or higher than the fusing temperature of the glass. In other words, the peripheral edge portions of the glass plates A and B are fused together at this time. Since the portions to be fused together and the circumferential portions thereof are preheated at the preheating step before the fusing step, a temperature of the portions to be fused together does not rapidly rise at the fusing step. Accordingly, a temperature fully rises on the circumference of the portions to be fused together so that a temperature gradient is relieved in the glass and a thermal stress is reduced. Consequently, cracks and great fractures are generated on the glass plates A and B with difficulty.

A period c denotes a period for which the torch head 8 circulates around the peripheral edge portions of the glass plates A and B for a third time and which corresponds to an annealing step. More specifically, after the torch head 8 circulates around the peripheral edge portions for fusion, it further circulates around the peripheral edge portions. At this time, the output of the laser oscillator 10 is indicated as P3 and it is possible to obtain such a heating level as to heat the peripheral edge portions of the glass plates A and B to a temperature which is lower than the fusing temperature of the glass. More specifically, the peripheral edge portions of the glass plates A and B fused together are cooled with the heating level. In other words, the peripheral edge portions are annealed. Due to the annealing, a temperature does not rapidly fall in the fused portions and the circumferential portions thereof. More specifically, the fused portions and the circumferential portions thereof are slowly cooled with a temperature gradient kept small, thereby preventing cracks and great fractures from being generated on the glass plates A and B.

Thus, when the torch head 8 circulates around the peripheral edge portions of the glass plates A and B three times. a series of steps. that is. preheating, fusing and annealing can be completed.

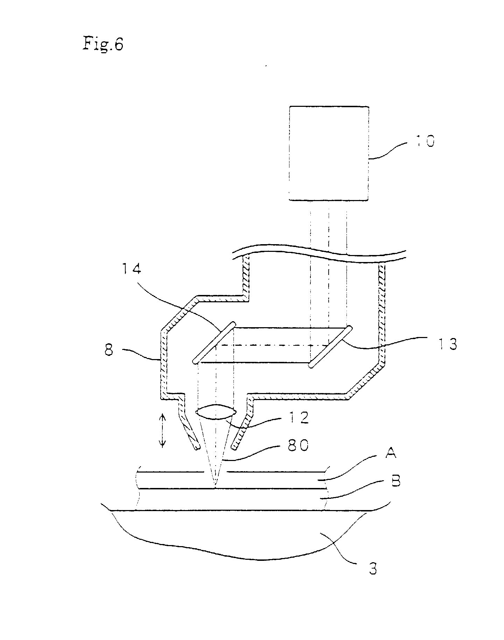

With reference to Figs. 6 to 7c, another method for changing the heating level will be described below. Fig. 6 is a sectional view showing the internal structure of the torch head 8 together with the table 3 and the glass plates A and B. A laser beam is supplied from the laser oscillator 10 to the torch head 8, is reflected by mirrors 13 and 14, and converges through an objective lens 12. And the laser beam, as irradiated light 80, is irradiated on the portions of the glass plates A and B which are to be fused together. The torch head 8 circulates around the peripheral edge portions of the glass plates A and B three times. This method is the same as the technique described with reference to Fig. 5 in that preheating, fusion and annealing are performed for first, second and third circulations respectively, but the heating level change is different.

When the torch head 8 is placed at a distance shown in Fig. 6 with respect to the table 3, the light 80 is collected almost accurately in the portions to be fused together. At this time, the irradiated light has a spot diameter of about 0.2 mm in the portions to be fused together, and it is possible to obtain a sufficient heating level for heating the glass to the fusing temperature or more. When the torch head 8 is lifted relatively with respect to the table 3 in a direction of an arrow in Fig. 6, a collecting state in the portions to be fused together can be adjusted. In other words, the spot diameter of the light 80 in the portions to be fused together can be changed. At the fusing step, accordingly, the degree of the collection of the irradiated light 80 in the portions to be fused together can be reduced to increase the spot diameter, thereby heating a wider range.

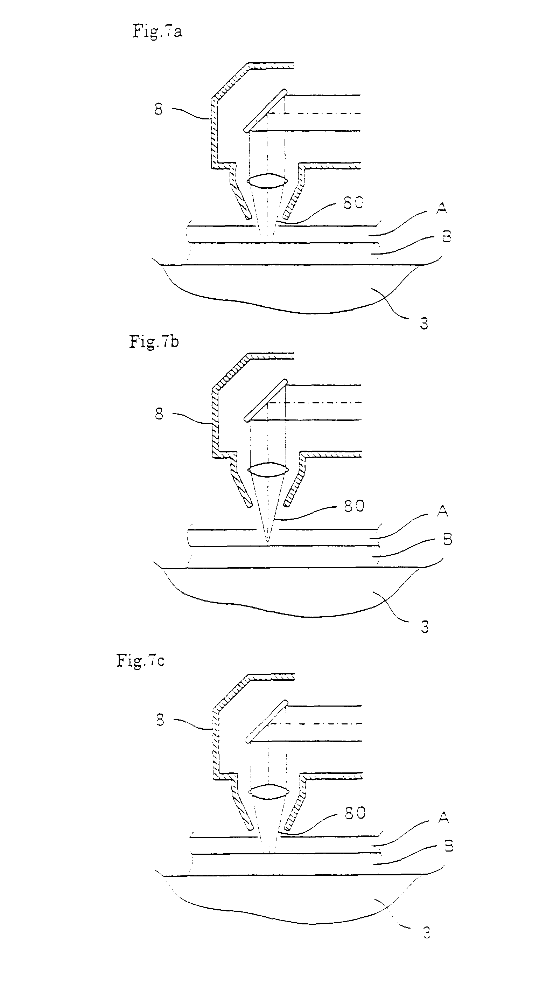

Referring to Figs. 7a to 7c, description will be given below. For a first circulation the torch head 8 is placed at a distance shown in Fig. 7a with respect to the table 3, and the irradiated light in the portions to be fused together has a spot diameter of about 5 mm. At this time, it is possible to obtain such a heating level as to heat the peripheral edge portions of the glass plates A and B to the softening point temperature of the glass. In other words, the peripheral edge portions of the glass plates A and B are heated to a temperature which is lower than the fusing temperature of the glass. Since the spot diameter is large, that is, about 5 mm, the wide range on the circumference of the portions to be fused together can be heated.

Next, the distance between the torch head 8 and the table 3 is changed to obtain a state shown in Fig. 7b. Consequently, the light 80 has a spot diameter of about 0.2 mm in the portions to be fused together so that the peripheral edge portions of the glass plates A and B can be heated to a temperature which is equal to or higher than the fusing temperature of the glass. In this state, the torch head 8 circulates for the second time so that the peripheral edge portions of the glass plates A and B are fused together. The preheating has been performed within a wide range having a spot diameter of about 5 mm. Therefore, a temperature gradient in the glass at the time of the fusion can be relieved still more.

Then, the distance between the torch head 8 and the table 3 is changed to obtain a state shown in Fig. 7c. Consequently, the light 80 has a spot diameter of about 5 mm in the portions to be fused together so that the peripheral edge portions of the glass plates A and B can be heated to a temperature which is lower than the fusing temperature of the glass. In this state, the torch head 8 circulates for the third time so that the peripheral edge portions of the glass plates A and B are annealed. The heating is performed within a wide range having a spot diameter of about 5 mm. Therefore, a temperature gradient in the glass at the time of the annealing can be relieved still more.

The controller lifts the lift member 6 with respect to a sliding member 5, thereby changing the distance between the torch head 8 and the table 3.

While the collecting state of the irradiated light in the portions to be fused together can also be adjusted by changing the distance between the torch head 8 and the table 3 as described above, it can also be adjusted by moving the objective lens 12 in the torch head 8 in the direction of an optical axis. More specifically, a lens moving device capable of moving the objective lens 12 in the torch head 8 should be provided and be controlled by control means, thereby controlling the movement of the objective lens. By such a structure, the spot diameter of the irradiated light 80 can be changed by adjusting the collecting state of the irradiated light 80 in the portions to be fused together. At the fusing step, accordingly, the degree of the collection of the irradiated light 80 can be reduced in the potions to be fused together to increase a spot diameter, thereby heating a wider range.

The glass fusing method and device according to the invention has been described above with reference to Figs. 1 to 7c. While the example of the case where the adjacent portions of the two glass pieces are fused together has been described above, the invention can also be applied to the case where the contact portions of the two glass pieces are fused together. Although a convex lens has chiefly been shown as an objective lens for generating the irradiated light in the above description, a concave lens can properly be used according to the desired size of a spot of the irradiated light. While the example of the light irradiating device using a laser beam has chiefly been described above, the light irradiating device is not restricted to the laser beam irradiating device but it is possible to use other light irradiating devices for irradiating light which can fuse glasses together. Also in the case where the laser beam irradiating device is used as the light irradiating device, the kind thereof is not particularly restricted but a CO₂ laser irradiating device and a YAG laser irradiating device can also be used, for example.

The glass fusing device 1 described above with reference to Figs. 1 to 7c serves to irradiate the light (laser beam), thereby locally heating the portions to be fused together to a temperature which is equal to or higher than the fusing temperature of the glass plates A and B to perform the fusion. Moreover, the preheating to be performed before the fusion and the annealing to be performed after the fusion are also carried out by the irradiation of the light (laser beam). However, it is also possible to employ a heating method other than the light irradiation which can locally heat the portions of the glass pieces to be fused together to a temperature which is equal to or higher than the fusing temperature. Furthermore, the preheating and the annealing may be carried out by the heating method other than the light irradiation.

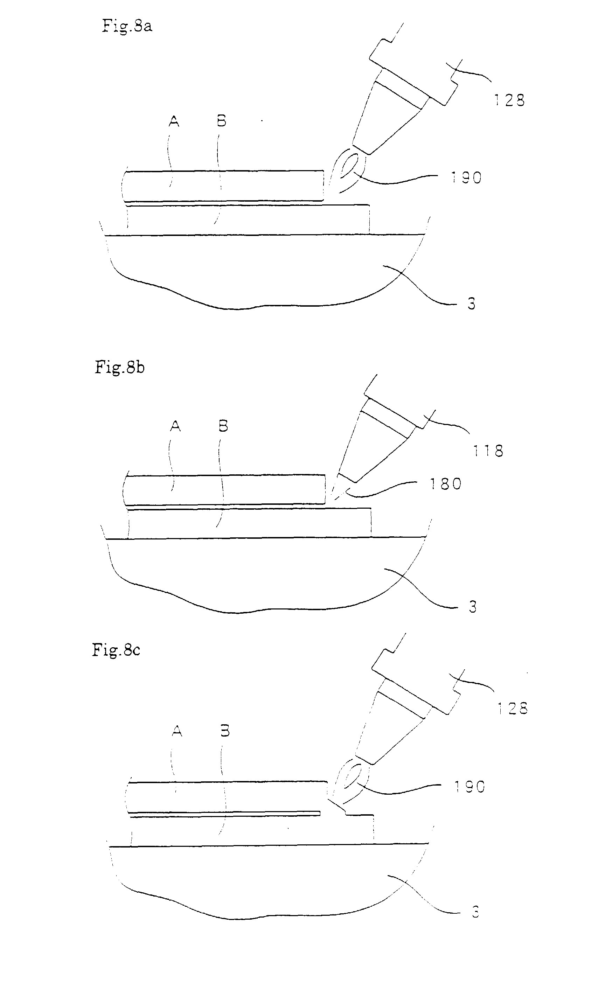

Figs. 8a to 8c are views illustrating a glass fusing device using a flame irradiating device at a preheating step and an annealing step and using a laser beam irradiating device at a fusing step. Figs. 8a, 8b and 8c show the preheating step, the fusing step and the annealing step, respectively. The glass fusing device comprises the flame irradiating device and the laser beam irradiating device. Figs. 8a and 8c illustrate a torch head 128 of a gas torch acting as the flame irradiating device, and Fig. 8b illustrates a torch head 118 of the laser beam irradiating device. In the glass fusing device, first of all, a flame 190 is irradiated from the torch head 128 to the portions of the glass plates A and B to be fused together which are fixed onto the table 3 as shown in Fig. 8a, thereby performing the preheating. The torch head 128 is formed to be movable relatively with respect to the table 3 and to change an angle. The torch head 128 circulates around the peripheral edge portions of the glass plates A and B, thereby preheating the whole peripheral edge portions to a temperature which is lower than the fusing temperature of the glass. When the preheating is thus completed, light 180 is irradiated from the torch head 118 onto the preheated portions as shown in Fig. 8b. thereby fusing the same portions of the glass plates A and B. The torch head 118 is also formed to be movable relatively with respect to the table 3 and to change an angle. The torch head 118 circulates around the peripheral edge portions of the glass plates A and B, thereby heating the whole peripheral edge portions to a temperature which is equal to or higher than the fusing temperature of the glass to perform fusion. When the fusion is thus completed, the torch head 128 is used again to irradiate the flame 190 therefrom onto the fused portions as shown in Fig. 8c, thereby performing annealing. Also in this case, the torch head 128 circulates around the peripheral edge portions of the glass plates A and B to perform annealing to a temperature which is lower than the fusing temperature of the glass while heating the whole peripheral edge portions. As described above, the preheating step, the fusing step and the annealing step are completed.

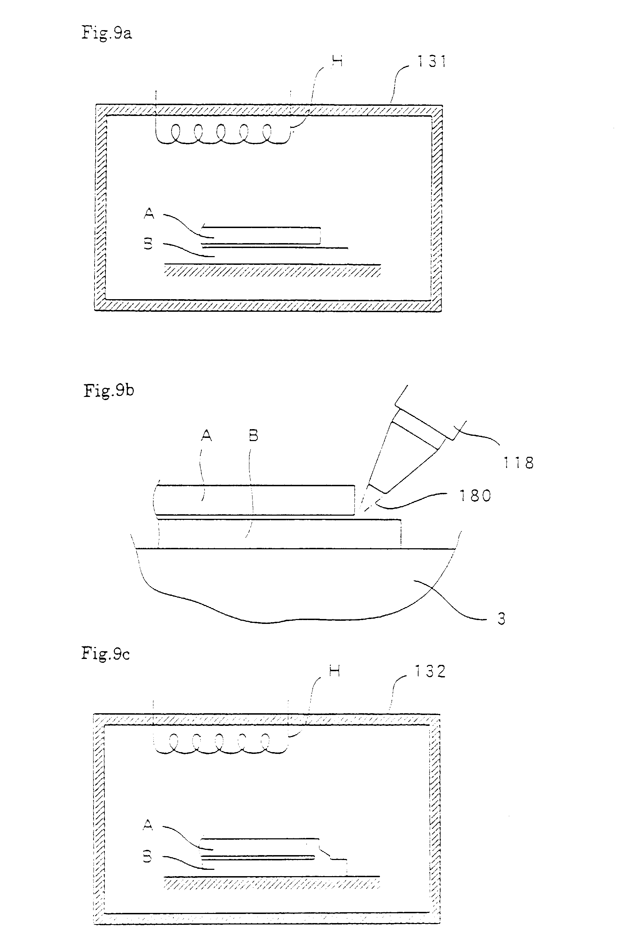

Figs. 9a to 9c are views illustrating a glass fusing device using a chamber at a preheating step and an annealing step and using a laser beam irradiating device at a fusing step. Figs. 9a, 9b and 9c show the preheating step, the fusing step and the annealing step, respectively. The glass fusing device comprises chambers 131 and 132. Fig. 9a shows the chamber 131, Fig. 9b shows a torch head 118 of the laser beam irradiating device, and Fig. 9c shows the chamber 132. Both the chambers 131 and 132 are constituted by a chamber which can automatically regulate a temperature, a temperature controlled bath and the like. In the Figs., H denotes an electric heating device (a heater) for heating the inside of each of the chambers 131 and 132. In the glass fusing device, first of all, each of the chambers 131 and 132 is set, by the electric heating device H, to a predetermined temperature which is lower than the fusing temperature of the glass plates A and B. As shown in Fig. 9a, then, the glass plates A and B are provided in the chamber 131, are left for a predetermined time to be heated to a temperature which is lower than the fusing temperature of the glass plates A and B. Thus, the whole glass plates A and B are preheated. Thereafter, the glass plates A and B are taken out of the chamber 131 and are fixed onto the table 3 as shown in Fig. 9b. Thus, the light 180 is irradiated from the torch head 118 to the portions of the glass pates A and B to be fused together. The torch head 118 is formed to be movable relatively with respect to the table 3 and to change an angle. The torch head 118 circulates around the peripheral edge portions of the glass plates A and B, thereby heating the whole peripheral edge portions to a temperature which is equal to or higher than the fusing temperature of the glass to perform fusion. When the fusion is thus completed, the fused glass plates A and B are then provided in the chamber 132 and are left for a predetermined time as shown in Fig. 9c. Consequently, the temperature of the fused portions of the glass plates A and B gradually falls to a temperature which is lower than the fusing temperature. In other words, the glass plates A and B are annealed. Thereafter, the glass plates A and B are taken out of the chamber 132. As described above, the preheating step, the fusing step and the annealing step are completed.

While the chamber 132 shown in Fig. 9c has the electric heating device H, a chamber (a temperature controlled bath) which does not comprise a heat source such as the electric heating device but has a wall portion simply insulated can also be used as the chamber for the annealing. Even if the chamber does not comprise the heat source, the fused glass plates A and B can be annealed if the wall portion is insulated.

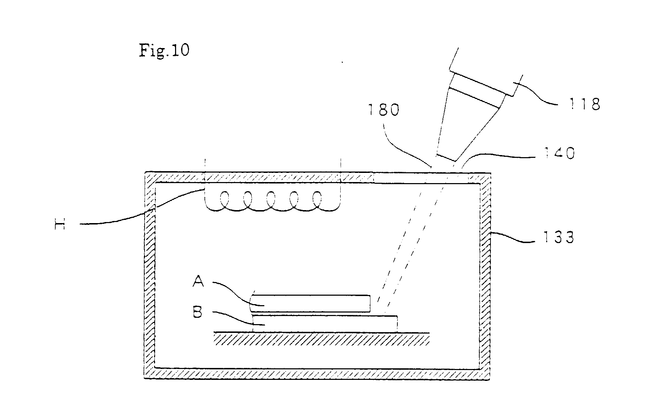

Fig. 10 is a view showing the structure of another glass fusing device using a heating chamber at a preheating step and an annealing step and using a laser beam irradiating device at a fusing step. The glass fusing device comprises a heating chamber 133 and the laser beam irradiating device. In Fig. 10. only a torch head 118 acting as a head portion of the laser beam irradiating device is shown. The heating chamber 133 is constituted by a chamber which can automatically regulate a temperature, a temperature controlled bath and the like. In Fig. 10, H denotes an electric heating device (a heater) for heating the inside of the heating chamber 133. A part of a wall portion of the heating chamber 133 forms a transmission window 140 capable of transmitting a laser beam. The transmission window 140 may be formed of a transparent member which can transmit the laser beam or may be formed as an opening without any member provided. In the glass fusing device, first of all, the heating chamber 133 is set, by the electric heating device H, to a predetermined temperature which is lower than the fusing temperature of the glass plates A and B. Then, the glass plates A and B are provided in the heating chamber 133, are left for a predetermined time to be heated to a temperature which is lower than the fusing temperature of the glass plates A and B. Thus, the whole glass plates A and B are preheated. Thereafter, in a state in which the glass plates A and B are kept in the heating chamber 133, the light 180 is irradiated from the torch head 118 to the portions of the glass pates A and B to be fused together through the transmission window 140. The torch head 118 is formed to be movable relatively with respect to the heating chamber 133 and to change an angle. The torch head 118 heats the portions of the glass plates A and B to be fused together to a temperature which is equal to or higher than the fusing temperature of the glass to perform fusion while moving relatively with respect to the heating chamber 133. When the fusion is thus completed, the fused glass plates A and B are then kept in the heating chamber 133 and are left for a predetermined time. Consequently, the temperature of the fused portions of the glass plates A and B gradually falls to a temperature which is lower than the fusing temperature. In other words, the glass plates A and B are annealed. Thereafter, the glass plates A and B are taken out of the heating chamber 133. As described above, the preheating step, the fusing step and the annealing step are completed.

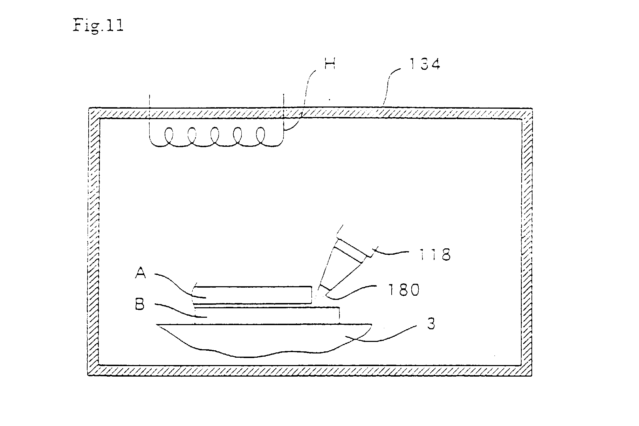

Fig. 11 is a view showing the structure of a further glass fusing device using a heating chamber at a preheating step and an annealing step and using a laser beam irradiating device at a fusing step. The glass fusing device comprises a heating chamber 134 and a laser beam irradiating device. The heating chamber 134 is constituted by a chamber which can automatically regulate a temperature, a temperature controlled bath and the like. In Fig. 11, H denotes an electric heating device (a heater) for heating the inside of the heating chamber 134. The laser beam irradiating device is provided in the heating chamber 134. In Fig. 11, only a torch head 118 acting as a head portion of the laser beam irradiating device is shown. A table 3 for fixing the glass plates A and B is provided in the heating chamber 134. The glass plates A and B are fixed onto the table 3.

In the glass fusing device, first of all, the heating chamber 134 is set, by the electric heating device H, to a predetermined temperature which is lower than the fusing temperature of the glass plates A and B. Then, the glass plates A and B are fixed onto the table 3 in the heating chamber 133, are left for a predetermined time to be heated to a temperature which is lower than the fusing temperature of the glass plates A and B. Thus, the whole glass plates A and B are preheated. Thereafter, in a state in which the glass plates A and B are fixed onto the table 3 in the heating chamber 134, light is irradiated from the torch head 118 to the portions of the glass plates A and B to be fused together. The torch head 118 is formed to be movable relatively with respect to the table 3 and to change an angle. The torch head 118 circulates around the peripheral edge portions of the glass plates A and B while moving relatively with respect to the table 3, thereby heating the whole peripheral edge portions to a temperature which is equal to or higher than the fusing temperature of the glass to perform fusion. When the fusion is thus completed, the fused glass plates A and B are then kept in the state in which they are fixed onto the table 3 in the heating chamber 134 and are left for a predetermined time. Consequently, the temperature of the fused portions of the glass plates A and B gradually falls to a temperature which is lower than the fusing temperature. In other words, the glass plates A and B are annealed. Thereafter, the glass plates A and B are taken out of the heating chamber 134. As described above, the preheating step, the fusing step and the annealing step are completed.

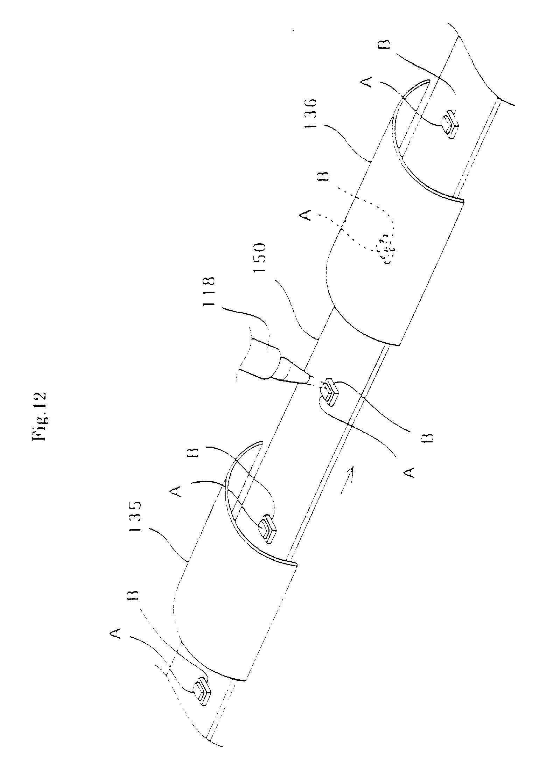

Fig. 12 is a view showing the structure of a further glass fusing device using a heating chamber at a preheating step and an annealing step and using a laser beam irradiating device at a fusing step. The glass fusing device has such a structure as to automatically preheat, fuse and anneal the glass plates A and B. The schematic structure of the glass fusing device will be described below, The glass fusing device comprises a laser beam irradiating device, a belt conveyer 150 for carrying the glass plates A and B, a heating chamber 135 for preheating the glass plates A and B, and a heating chamber 136 for annealing the glass plates A and B. The belt conveyer 150 is provided in a horizontal direction below a torch head 118 of the laser beam irradiating device. The torch head 118 has such a structure that it can be moved relatively with respect to the belt conveyer 150 in three directions orthogonal one another by means of a moving mechanism which is not shown and angles thereof in a horizontal plane and a vertical plane can be changed. The heating chambers 135 and 136 are provided to cover the belt conveyer 150 on the upstream and downstream sides of a portion where the torch head 118 is to be positioned, respectively. Each of the heating chambers 135 and 136 has a heater (not shown) provided on an internal face thereof, and a heating level of the heater can be set to a desired level. The belt conveyer 150 is provided with a work fixing portion (not shown) for fixing the glass plates A and B with a predetermined pitch in the longitudinal direction of the belt, and the belt is moved with the predetermined pitch at a predetermined time interval. Accordingly, each work fixing portion sequentially passes through a position in the heating chamber 135, a position below the torch head 118 and a position in the heating chamber 136 while stopping for the predetermined time at the positions.

Next, the operation of the glass fusing device having the above-mentioned structure will be described. First of all, the heating levels of the heating chambers 135 and 136 are preset in such a manner that the glass plates A and B passing through the heating chambers 135 and 136 are set to a predetermined preheating temperature and an annealing temperature.

Subsequently, the glass plates A and B are fixed to the work fixing portion of the belt conveyer 150, and the belt conveyer 150 is actuated. Consequently, the glass plates A and B fixed to the work fixing portion are first moved into the heating chamber 135 and are preheated to a predetermined preheating temperature therein. Then, the preheated glass plates A and B are moved to the position below the torch head 118, and are fused together by the irradiation of light from the torch head 118 on the portions to be fused together. Thereafter, the fused glass plates A and B are moved into the heating chamber 136, and are annealed to a predetermined annealing temperature with heated. As described above, the preheating step, the fusing step and the annealing step are completed. In the glass fusing device, the glass plates A and B can automatically be preheated, fused and annealed. Therefore, a labor cost can be reduced.

With the above-mentioned structure, the belt conveyer 150 is intermittently moved. However, the belt conveyer 150 may be continuously moved and the torch head 118 may fuse the glass plates A and B together while following the glass plates A and B moved together with the belt conveyer 150.

Numerous modifications and alternative embodiments of the invention will be apparent to those skilled in the art in view of the foregoing description. Accordingly, this description is to be construed as illustrative only, and is provided for the purpose of teaching those skilled in the art the best mode of carrying out the invention. The details of the structure and/or function may be varied substantially without departing from the spirit of the invention.

## Claims

1. A glass fusing method for fusing contact or close portions of two glass pieces, comprising the steps of;
preheating the portions to a temperature which is lower than a fusing temperature of the glass;
fusing the portions by locally heating them to a temperature which is equal to or higher than the fusing temperature of the glass after the preheating step; and
annealing the portions to a temperature which is lower than the fusing temperature of the glass after the fusing step.

2. The glass fusing method according to claim 1, wherein the portions are locally heated by irradiation of light at the fusing step.

3. The glass fusing method according to claim 2, wherein the light is a laser beam.

4. A glass fusing device for fusing contact or close portions of two glass pieces by irradiating light thereon, comprising:
preheating means for preheating the portions to a temperature which is lower than a fusing temperature of the glass;
fusing means for fusing the portions by heating them to a temperature which is equal to or higher than the fusing temperature of the glass after the preheating performed by the preheating means; and
annealing means for annealing the portions to a temperature which is lower than the fusing temperature of the glass after the fusion performed by the fusing means,
wherein the fusing means includes at least a light irradiating device and control means for regulating a heating level of the portions by light irradiated from the light irradiating device, and
the fusing means fuses the portions by regulating the heating level through the control means to heat the portions to the temperature which is equal or higher than the fusing temperature of the glass.

5. The glass fusing device according to claim 4, wherein the control means regulates the heating level by adjusting an output of a light source of the light irradiating device.

6. The glass fusing device according to claim 4, wherein the control means regulates the heating level by adjusting a collecting state of the light for the portions.

7. The glass fusing device according to claim 6, wherein a spot diameter of the light can be changed in the portions by adjusting the collecting state of the light through the control means.

8. The glass fusing device according to claim 7, further comprising a table for fixing the glass pieces and a moving device capable of changing a distance between the table and an irradiating portion of the light irradiating device,
wherein the control means adjusts the collecting state by controlling the moving device to regulate the distance between the table and the irradiating portion.

9. The glass fusing device according to claim 7, further comprising a lens moving device for moving an objective lens in the light irradiating device,
wherein the control means adjusts the collecting state by controlling the lens moving device to move the objective lens.

10. A glass fusing device for fusing contact or close portions of two glass pieces, comprising;
preheating means for preheating the portions to a temperature which is lower than a fusing temperature of the glass;
fusing means for fusing the portions by locally heating them to a temperature which is equal to or higher than the fusing temperature of the glass after the portions are preheated; and
annealing means for annealing the portions to a temperature which is lower than the fusing temperature of the glass after the portions are fused.

11. The glass fusing device according to claim 10, wherein the fusing means locally heats the portions by irradiation of light.

12. The glass fusing device according to claim 11, wherein the light irradiated from the fusing means is a laser beam.

13. The glass fusing device according to claim 10, wherein the preheating means preheats the portions by irradiation of light.

14. The glass fusing device according to claim 13, wherein the light irradiated from the preheating means is a laser beam.

15. The glass fusing device according to claim 10, wherein the preheating means preheats the portions by irradiation of a flame.

16. The glass fusing device according to claim 10, wherein the preheating means is a heating chamber capable of accommodating the two glass pieces.

17. The glass fusing device according to claim 10, wherein the annealing means heats the portions by irradiation of a flame.

18. The glass fusing device according to claim 10, wherein the annealing means is a heating chamber capable of accommodating the two glass pieces.

19. A glass fusing method in which the rate of change of temperature of the glass (A, B) being fused is controlled to reduce the formation of cracks therein.

20. A glass fusing device comprising means (8; 118, 128; 118, H; 118, 135, 136) for heating glass (A, B) being fused and means for controlling the rate of change of temperature of the glass (A, B) to reduce the formation of cracks therein.
